Europäisches Patentamt

European Patent Office

Office européen des brevets

(19)

(11) EP 0 882 764 A1

(12) # DEMANDE DE BREVET EUROPEEN

(43) Date de publication:
09.12.1998 Bulletin 1998/50

(51) Int. Cl.$^6$: C08L 23/02

(21) Numéro de dépôt: 98201756.8

(22) Date de dépôt: 27.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 02.06.1997 BE 9700477

(71) Demandeur: SOLVAY
B-1050 Bruxelles (BE)

(72) Inventeurs:
• Claeys, Ivan
1981 Zemst/Hofstade (BE)
• Mulkens, Edmond
1420 Braine-L'Alleud (BE)

(74) Mandataire:
Dambois, Denis Camille Daniel et al
Solvay S.A.
DCR-PI
310, rue de Ransbeek
1120 Bruxelles (BE)

(54) **Composition à base de matière plastique**

(57) Composition comprenant (en poids) :

(A) de 10 à 45 % d'un mélange essentiellement constitué de :

(a) au moins un polymère porteur de groupements anhydride d'acide, et
(b) au moins un composé choisi parmi les polyalcools et les polyamines, ainsi que

(B) de 90 à 55 % d'une ou plusieurs polyoléfines non-fonctionnelles, comprenant (par rapport au poids total de (a), (b) et (B))

plus de 15 % d'au moins une polyoléfine non-fonctionnelle présentant un module d'élasticité (E) inférieur à 200 MPa et
moins de 50 % de polypropylène isotactique.

Les feuilles réalisées par mise en oeuvre de cette composition sont par exemple utilisables dans l'habillage intérieur des véhicules en remplacement de feuilles à base de PVC, avec comme avantages notamment une plus faible masse spécifique et l'absence de plastifiants. Ces feuilles présentent une bonne aptitude au thermoformage, en raison d'une bonne tenue en fondu en empêchant l'affaissement.

EP 0 882 764 A1

**Description**

La présente invention concerne une composition à base de matière plastique, apte au calandrage et au thermoformage, utilisable notamment dans l'habillage intérieur des véhicules.

Les matières plastiques les plus couramment utilisées dans l'habillage intérieur des véhicules sont généralement des compositions plastifiées à base de polymères chlorés, tels que le polychlorure de vinyle (PVC). Bien que ces polymères donnent des résultats satisfaisants, leur remplacement par des compositions à base de polyoléfines présenterait plusieurs avantages, tels que d'une part l'économie de carburant découlant de leur plus faible masse spécifique, et d'autre part l'absence de plastifiants, conduisant à une suppression du "fogging" et du risque de rigidification et de fragilisation.

Le PVC présente cependant des caractéristiques très intéressantes sur le plan de la mise en oeuvre ; ainsi, il peut être aisément calandré ou extrudé pour la fabrication de feuilles et se prête bien au thermoformage. En particulier, l'épaisseur d'une feuille de PVC reste relativement régulière pendant le thermoformage, grâce a phénomène dit de "durcissement structurel" ("strain hardening"). En outre, la bonne tenue en fondu empêche l'affaissement ("sagging") d'une feuille de grandes dimensions pendant l'étape de réchauffement précédant une mise en forme par thermoformage.

Ni le polypropylène (PP) ni les polyéthylènes (PE) linéaires ne présentent ces propriétés rhéologiques. Les PE (homo- et copolymères) à branchements longs, typiquement polymérisés par voie radicalaire sous haute pression - par ex. le PE de basse densité (LDPE) ou les copolymères éthylène-acétate de vinyle (EVA) - conviennent mieux, mais sans égaler le PVC.

Diverses tentatives ont été faites pour résoudre ces problèmes. On a notamment déjà proposé des compositions du type PP-élastomère (par ex. PP-EPDM), qui conviennent aux applications peu exigeantes mais dont l'aptitude au thermoformage profond est insuffisante. Une réticulation de la phase élastomérique améliore leurs propriétés rhéologiques, mais augmente sensiblement le coût du produit. En outre, la présence d'EPDM accroît la sensibilité au rayonnement UV, et aucun de ces produits ne peut être calandré de manière satisfaisante.

Par ailleurs, le document EP 508415 décrit des films constitués de :

(A) 10 à 80 % de PP homo- ou copolymère,
(B) 5 à 30 % d'un copolymère de l'éthylène très spécifique, présentant notamment une température de fusion d'au moins 100°C, et
(C) 5 à 85 % d'un (co)polymère de l'éthylène obtenu par polymérisation radicalaire à haute pression ou d'une polyoléfine modifiée notamment par la présence de groupements acide ou anhydride carboxylique, époxyde, hydroxyle ou amino.

Ce document ne suggère en rien de combiner différents constituants (C) ; ni même d'utiliser spécifiquement un constituant (C) qui soit fonctionnel au sens de la présente demande. Le problème qui y est présenté ne concerne par ailleurs en rien les propriétés rhéologiques des compositions concernées. En outre, dans les cas où le constituant (C) est une polyoléfine porteuse de groupements d'anhydride maléique, le forte adhérence des compositions aux surfaces métalliques empêchera probablement tout calandrage. Enfin, le copolymère (B) est extrêmement spécifique ; il n'est pas largement disponible, et sa faible souplesse empêche généralement d'obtenir un module d'élasticité inférieur à 200 MPa.

La présente invention vise dès lors à fournir une composition à base de polyoléfines remédiant à ces inconvénients, présentant un durcissement important en écoulement élongationnel et convenant particulièrement bien à la fabrication de films ou de feuilles par extrusion, moulage ou calandrage, ces produits étant par ailleurs aisément thermoformables.

De manière plus précise, la présente invention concerne une composition comprenant (en poids) :

(A) de 10 à 45 % d'un mélange essentiellement constitué de :

(a) au moins un polymère porteur de groupements anhydride d'acide, et
(b) au moins un composé choisi parmi les polyalcools et les polyamines, ainsi que

(B) de 90 à 55 % d'une ou plusieurs polyoléfines non-fonctionnelles, comprenant (par rapport au poids total de (a), (b) et (B))
plus de 15 % d'au moins une polyoléfine non-fonctionnelle présentant un module d'élasticité (E) inférieur à 200 MPa et
moins de 50 % de polypropylène isotactique.

Toutes les proportions indiquées ci-dessus sont exprimées par rapport au poids total de (a), (b) et (B).

Avantageusement, la composition est essentiellement constituée de (a), (b) et (B). De manière préférée, la composition ne comprend aucun autre constituant polymérique que ceux énumérés ci-dessus.

Il est avantageux que ni (a), ni (b) ni (B) ne soient ou ne comprennent des polymères chlorés. Il est même préférable que la composition ne comprenne aucun polymère chloré.

Le polymère (a) porteur de groupements anhydride d'acide peut avoir été obtenu par copolymérisation avec un monomère de ce type. Il peut encore avoir été obtenu par greffage postérieurement à la synthèse d'un polymère non-greffé, par exemple en utilisant la technique de l'extrusion réactive. On préfère toutefois que le polymère (a) ait été obtenu par copolymérisation et non par greffage. Les monomères utilisables à cette fin sont notamment les anhydrides maléique et itaconique. On préfère utiliser l'anhydride maléique. Par rapport au poids du polymère a, on préfère que la teneur pondérale des groupements anhydride d'acide soit d'au moins 0,05 %, et avantageusement d'au moins 0,2 %. Cette teneur est généralement inférieure à 25 %, de préférence inférieure à 10 %.

De préférence, le polymère (a) est une polyoléfine porteuse de groupements anhydride d'acide.

Par polyoléfine, on entend désigner tout polymère comprenant (en moles) au moins 60% d'une ou plusieurs $\alpha$-oléfines telles que le propylène, l'éthylène, le butène, etc.

On préfère que la polyoléfine (a) soit un copolymère de l'éthylène, c'est-à-dire contenant plus de 60 %, et de préférence plus de 70 % (en moles)d'éthylène. Outre les groupements oléfiniques et anhydride, le polymère (a) peut éventuellement encore comprendre des comonomères d'un ou plusieurs autres types, tels que des esters (méth)acryliques.

Le composé (b) peut être polymérique ou monomérique. Si plusieurs composés (b) sont utilisés simultanément, ils peuvent être polymériques ou monomériques indépendamment les uns des autres. Il peut notamment s'agir de glycérine, d'éthylène glycol, de glucose, de sorbitol, de diglycérine, de triglycérine, de polyglycérine, de pentaérithrytol (PERI), de triméthylolpropane (TMP), de triéthanolamine, etc..

Si un ou plusieurs polyalcools sont utilisés, il est préférable qu'il s'agisse de composés donc les groupements hydroxyle soient aisément accessibles. A titre d'exemple, les groupements hydroxyle des phénols encombrés ne sont pas aisément accessibles. Des polyalcools convenant bien sont par contre les polyalcools polymériques de synthèse, en particulier les copolymères à base d'éthylène. A titre de polyalcools polymériques, on peut également utiliser les alcools polyvinyliques et les polymères obtenus par réaction d'un alcool monomérique (par exemple le TMP ou le PERI) et une lactone (de préférence l'$\varepsilon$-caprolactone), tels que les polymères CAPA® 301 et 305 de SOLVAY.

On préfère utiliser un ou plusieurs composés (b) choisis parmi les polyalcools et polyamines polymériques. Dans ce cas, il est avantageux que ce ou ces polymères présentent un module d'élasticité inférieur à 200 MPa.

En particulier, de très bons résultats ont été obtenus lorsque le compose (b) comprend au moins un copolymère constitué de :

(i) au moins une $\alpha$-oléfine (de préférence l'éthylène),
(ii) au moins un monomère porteur de fonctions alcool (par exemple de l'acrylate ou du méthacrylate d'hydroxypropyle ou d'hydroxyéthyle) et/ou amine (par exemple de la mélamine), et
(iii) éventuellement, un ou plusieurs autres comonomères non-fonctionnels et non-oléfiniques (par exemple l'acétate de vinyle ou un ester acrylique).

De préférence, le composé (b) consiste exclusivement en un tel copolymère, ou en un mélange de tels copolymères. De très bons résultats ont été obtenus avec un terpolymère d'éthylène, d'acétate de vinyle et de 1-hydroxypropyl-méthacrylate.

La quantité des monomères fonctionnels (ii) est de préférence inférieure à 35 % en poids, et de manière particulièrement préférée inférieure à 20%. Il est en outre avantageux que la teneur totale des monomères non-oléfiniques (ii + iii) n'excède pas 50 % en poids.

Les fonctions alcool ou amine peuvent également être introduites par le greffage de tels groupements sur un polymère ne comportant initialement aucune de ces fonctions.

Que le polyalcool ou la polyamine soit monomérique ou polymérique, il est avantageux que le polyalcool ou la polyamine (b) comprenne en moyenne au moins 2, et de préférence au moins 3, fonctions alcool ou amine par molécule. Par fonction amine, on entend désigner une liaison NH. Ainsi, une amine tertiaire ($NR_3$) ne comprend aucune fonction amine (pour autant que $R_3$ n'en comprenne aucune), alors qu'une amine primaire ($NH_2R$) en comprend deux.

Il est par ailleurs souhaitable que la teneur pondérale du composé (b) en fonctions alcool (OH) ou amine (NH) soit d'au moins 200 ppm, et de préférence d'au moins 1000 ppm. A titre d'exemple, pour la triglycérine, cette teneur est de 17 x 3 / 192 = 550000 ppm. Un ou plusieurs polyalcools peuvent éventuellement être utilisés en mélange avec une ou plusieurs polyamines. On peut aussi utiliser un ou plusieurs composés comprenant à la fois des groupements alcool et des groupements amine. La teneur susmentionnée concerne dans ces cas la quantité totale de groupements alcool et amine.

Il est en outre avantageux d'utiliser des polyalcools et/ou des polyamines dont la température de fusion est inférieure à 210°C, et de préférence inférieure à 170 °C. Par ailleurs, les meilleurs résultats ont été obtenus en utilisant exclusivement des polyalcools à titre de composés (b).

Au sein du mélange (A), il est avantageux que la proportion pondérale du composé (b) soit de 0,3 à 95 %.

Selon une variante avantageuse, les proportions relatives des constituants (a) et (b) sont choisies de façon à ce que le rapport des teneurs pondérales des groupements fonctionnels (TGF) soit compris entre 0,2 et 50, et de préférence entre 0,3 et 20. Cette TGF est définie comme valant

$$TGF = \frac{\sum_{a_1} f_X^{a_1} \cdot c_{a_i}}{\sum_{b_1} f_Y^{b_1} \cdot c_{b_i}} \, ,$$

expression dans laquelle :

- la sommation au numérateur concerne tous les polymères $a_i$ du type (a) et celle du dénominateur tous les composés (polyalcools et/ou polyamines) $b_i$ du type (b) ;
- le facteur

$$f_X^a$$

représente la concentration pondérale des groupements anhydride X dans le polymère $a_i$ ; ce facteur peut notamment se calculer en multipliant la concentration molaire de l'anhydride X dans $a_i$ (moles de X par gramme de $a_i$) par la masse molaire de X (g/mol) (par exemple 98 pour l'anhydride maléique) ;
- le facteur

$$c_{a_i}$$

représente la concentration pondérale du polymère $a_i$ dans la composition ;
- les facteurs

$$f_Y^{b_i} \quad et \quad c_{b_i}$$

ont des significations analogues en ce qui concerne les fonctions alcool (OH, masse molaire 17) et/ou amine (NH, masse molaire 15) Y contenus dans le composé $b_i$.

Dans le cas très simple où la composition contient un seul polymère (a) et un seul Dans le cas très simple où la composition contient un seul polymère (a) et un seul composé (b), on a donc :

$$TGF = \frac{f_X^a \cdot c_a}{f_Y^b \cdot c_b}$$

De préférence, la proportion du mélange (A) dans la composition est d'au moins 20 % en poids. Avantageusement, elle est d'au plus 35 %.

Il est avantageux que le mélange (A) soit exclusivement constitué des constituants (a) et (b).

Il est par ailleurs avantageux que le constituant (B) présente un indice de fluidité au fondu (melt index) (mesuré selon la norme ISO 1133 dans les conditions 2,16 kg / 190 °C pour les polymères majoritaires en éthylène et 2,16 kg / 230°C pour les polymères majoritaires en propylène) d'au moins 0,1 dg/min, de préférence d'au moins 0,3 dg/min. Par ailleurs, cet indice est avantageusement d'au plus 10 dg/min, et de préférence d'au plus 6 dg/min.

La ou les polyoléfines (B) sont "non-fonctionnelles", c'est-à-dire qu'elle ne comprennent substantiellement aucun groupement carboxyle, anhydride, alcool ou amine (moins de 0,005 % en poids, de préférence 0 %).

La définition donnée précédemment n'implique pas obligatoirement que le constituant (B) comprend du polypropylène isotactique (PPiso). Elle implique uniquement que, lorsque du PPiso est présent, sa quantité doit être limitée (moins de 50 %, et de préférence moins de 30? %). Par PPiso, on entend désigner aussi bien les homopolymères isotactiques du propylène que les copolymères isotactiques du propylène en contenant plus de 90 % en poids.

Selon une variante préférée, le constituant (B) comprend :

soit (c) au moins une polyoléfine dont la température de fusion est d'au moins 130°C et
(d) plus de 15 % (par rapport au poids total de (a), (b) et (B)) d'au moins un copolymère comprenant au moins 50 % en moles d'éthylène, présentant un module d'élasticité (E) inférieur à 200 MPa et une température de fusion inférieure à 95°C,
soit (e) plus de 30 % (par rapport au poids total de (a), (b) et (B)) d'au moins une polyoléfine présentant un module d'élasticité (E) inférieur à 200 MPa et une température de fusion supérieure à 95 °C.

Avantageusement, la composition est essentiellement constituée de (a), (b), (c) et (d), ou bien de (a), (b) et (e). De manière préférée, la composition ne comprend aucun autre constituant polymérique que ceux énumérés ci-dessus.

La polyoléfine (c) peut être de toute type connu, homopolymère ou copolymère.

Il s'agit de préférence d'un copolymère comprenant au moins 60 % en poids de propylène, de préférence au moins 90 %. Avantageusement, ce copolymère comprend au plus 98 % de propylène. Outre le propylène, il comprend un ou plusieurs autres comonomères non-fonctionnels choisis parmi les α-oléfines. On préfère utiliser l'éthylène comme autre comonomère. Ce copolymère peut être aussi bien un copolymère statistique qu'à blocs.

On préfère que la polyoléfine (c) présente un indice de fluidité au fondu (melt index) (mesuré comme indiqué ci-dessus) d'au moins 0,1 dg/min, de préférence d'au moins 0,3 dg/min. Par ailleurs, cet indice est avantageusement d'au plus 10 dg/min, et de préférence d'au plus 6 dg/min.

Selon une variante préférée, la température de fusion de la polyoléfine (c) est d'au moins 135°C. Sauf mention contraire, toutes les températures de fusion mentionnées dans la présente demande sont mesurées selon la norme ISO 3146 (pic de fusion en DSC selon méthode C2).

Le copolymère (d) comprend de préférence au moins 50 % en poids d'éthylène. Il en comprend avantageusement moins de 85 %. Outre l'éthylène, ce copolymère comprend un ou plusieurs autres comonomères non-fonctionnels, choisis avantageusement parmi les α-oléfines, l'acétate de vinyle et les esters acryliques. On préfère utiliser une α-oléfine comme autre comonomère.

Il est en outre préférable que le copolymère (d) présente une densité inférieure à 0,910. Son module d'élasticité (< 200 MPa) est avantageusement inférieur à 150 MPa.

On préfère que le constituant (B) comprenne, en poids, de 25 à 65 % de polyoléfine(s) (c) et 35 à 75 % de copolymère(s) (d) (par rapport au poids total de (c) et (d)).

Alternativement, le constituant (B) comprend plus de 30 % (par rapport au poids total de (a), (b) et (B)) d'une ou plusieurs polyoléfines (e) présentant un module d'élasticité (E) inférieur à 200 MPa et une température de fusion supérieure à 95 °C. A titre d'exemples de telles polyoléfines (e), on peut citer les polyéthylènes de basse densité (LDPE, LLDPE, VLDPE). On préfère utiliser un mélange de LLDPE et de LDPE, caractérisés par des densités inférieures à 0,94.

Selon cette variante, le constituant (B) peut en outre comprendre une ou plusieurs autres polyoléfines non-fonctionnelles quelconques (f). A cette fin, on utilise avantageusement des copolymères élastomériques à base d'éthylène, les comonomères préférés étant choisis parmi le propylène, les α-oléfines en $C_4$ à $C_8$ et l'acétate de vinyle. Advantageusement, le constituant (B) est cependant essentiellement constitué d'une ou plusieurs polyoléfines (e).

Outre les constituants énumérés ci-dessus, la composition peut encore comprendre un ou plusieurs additifs usuels tels que stabilisants UV ou autres, anti-oxydants, pigments, agents antistatiques, agents ignifugeants, agents de matage, lubrifiants, etc. Sans prendre en compte le ou les éventuels agents ignifugeants, le poids total de tels additifs n'excède de préférence pas 10 parties par rapport à 100 parties des constituants (A) et (B) ; en prenant en compte le ou les éventuels agents ignifugeants, le poids total des additifs n'excède de préférence pas 30 parties. Si d'éventuels additifs polymériques sont présents, ils doivent être non-fonctionnels (exempts de groupements carboxyle, anhydride, alcool ou amine), et leur quantité ne doit pas excéder 5 parties en poids. On préfère cependant ne pas utiliser d'additifs polymériques.

La composition peut encore comprendre une ou plusieurs charges minérales telles que du carbonate de calcium ou des oxydes métalliques (notamment de zinc), la concentration pondérale de ces charges n'excédant de préférence pas 150 parties (par rapport à 100 parties des constituants (A) et (B)), et de préférence pas 60 parties. Le carbonate de calcium est préféré.

Un ou plusieurs catalyseurs de réticulation peuvent également être présents (de préférence en quantités pondérales n'excédant pas 3 % par rapport à (A)), par exemple une amine tertiaire. On préfère toutefois qu'aucun tel catalyseur ne soit présent.

Selon une variante avantageuse de l'invention, la composition comprend en outre un ou plusieurs sels d'acide gras.

A titre d'exemple non limitatif, on peut employer les laurates, stéarates et béhénates de calcium, de sodium, de potassium, de magnésium et/ou de zinc. Parmi ceux-ci, les stéarates de zinc et/ou de calcium sont préférés. On a constaté que l'utilisation de ces sels non seulement permet de mettre en oeuvre la formulation par calandrage sans adhérence excessive aux surfaces métalliques, mais aussi, de manière plus inattendue, qu'elle améliore significativement le durcissement en écoulement élongationnel. La concentration pondérale de ce ou ces sels est généralement inférieure à 3 parties pour 100 parties de (A + B), et de préférence inférieure à 2 parties.

La composition conforme à l'invention se prête particulièrement bien à la fabrication d'une feuille dont au moins une couche est essentiellement constituée d'une telle composition. Une telle feuille, monocouche ou multicouche, peut notamment être utilisée dans l'habillage intérieur de véhicules.

Un ou plusieurs agents moussants tels que l'azodicarbonamide peuvent également être incorporés à la composition de l'invention en vue de la transformer ultérieurement en une mousse. Alternativement, une mousse peut également être obtenue en injectant un gaz (par exemple un halogénocarbure, un alcane tel que du butane ou du propane, du $CO_2$, de la vapeur d'eau, ...) dans la composition lors de son extrusion. La composition de l'invention est particulièrement adaptée à la fabrication de mousses vu ses bonnes propriétés de durcissement en écoulement élongationnel.

A cette fin, la présente invention concerne également un article dont au moins une partie se présente sous la forme d'une mousse constituée d'une composition telle que définie ci-dessus. Il peut notamment s'agir d'une feuille comportant une telle couche de mousse ainsi qu'une peau superficielle lisse ou grainée, qui peut également être constituée d'une composition conforme à l'invention.

Sans que cela ne nuise aux propriétés rhéologiques, les proportions des différents constituants de la composition décrite ci-dessus peuvent être librement choisies dans les plages indiquées, en fonction d'autres exigences telles que par ex. la souplesse, la résistance thermique et/ou le coût.

Les feuilles de l'invention présentent de nombreux avantages, tels que :

- poids spécifique plus faible (par rapport aux feuilles à base de PVC), d'où une économie de carburant lorsqu'elles sont utilisées dans des véhicules,
- absence de plasifiants, avec comme conséquences la suppression du fogging (dû à la volatilisation des plastifiants et à leur redépôt sur les vitres), ainsi que du risque de rigidification et de fragilisation que pourrait entraîner la migration de plastifiants,
- une bonne résistance au rayonnement UV,
- l'absence de dégagement de gaz chlorés en cas d'incinération ou d'incendie,
- la facilité du recyclage (la plupart des composants en matière plastique utilisés dans les véhicules étant à base de polyoléfines).

Exemples

Les exemples suivants illustrent, de façon non limitative, les avantages de la composition de l'invention. Les exemples 1-3 et 5-9 sont conformes à l'invention, et les exemples 4R et 10R sont donnés à titre de comparaison.

**Description des ingrédients utilisés** (cf. Tableau 1)

**Composés a :**

a1. LOTADER[®] 2200 (ELF ATOCHEM) : Terpolymère d'éthylène (91 % en poids), d'ester acrylique et d'anhydride maléique.
a2. OREVAC[®] 18305 (ELF ATOCHEM) : Polyéthylène linéaire de basse densité greffé d'anhydride maléique.
a3. EXXELOR[®] VA1820 (EXXON CHEMICALS) : EPR greffé d'anhydride maléique
a4. OREVAC[®] 18303 (ELF ATOCHEM) : PE linéaire de basse densité (LLDPE) greffé d'anhydride maléique.
a5. LOTADER[®] 3210 (ELF ATOCHEM) : terpolymère d'éthylène (91 % en poids), d'ester acrylique et d'anhydride maléique.

**Composés b :**

b1. OPTENE[®] OE0467 (BOREALIS) : Terpolymère d'éthylène, d'acétate de vinyle et d'un monomère porteur de groupements alcool (la proportion de ce comonomère vaut 10 % en poids selon le fournisseur). Une analyse RMN a révélé une concentration équivalente en groupements OH d'au moins 0,7 % en poids (7000 ppm).
b2. Glycérine.

**Composés c et d :**

c1. ELTEX® P KL177 (SOLVAY POLYOLEFINS EUROPE) : copolymère statistique propylène-éthylène à teneur "moyenne" en éthylène.

d2. ENGAGE™ 8100 (DUPONT -DOW ELASTOMERS) : copolymère éthylèneoctène à haute teneur en octène (≥ 20 %).

d3. ESCORENE® UL00119 (EXXON CHEMICALS) : copolymère EVA à 19 % en poids d'acétate de vinyle.

**Additifs**

IRGANOX® 1010 : antioxydant (CIBA-GEIGY).

OMYALIT® 95T (OMYA) : carbonate de calcium traité en surface pour augmenter son affinité

Tableau 1

|  |  | M.l. dg/min | conditions | | Tm °C | E MPa | $f_x$ |
|---|---|---|---|---|---|---|---|
|  |  |  | °C | kg |  |  |  |
| LOTADER 2200 | a1 | 1 | 190 | 2,16 | 109 | 130∗ | 1,5 % à 2,6 % |
| OREVAC 18305 | a2 | 4 | 190 | 2,16 | 127 | 240£ | ~0,20% |
| EXXELOR VA1820 | a3 | 5 | 230 | 10 |  |  | 0,30% |
| OREVAC 18303 | a4 | 2 | 190 | 2,16 | 124 | 204£ |  |
| LOTADER 3210 | a5 | 55 | 190 | 2,16 | 107 | 120 | 3,1 % |
| NESTE OE0467 | b1 | 1,5 | 190 | 2,16 | 94 | 52# | 0,7 % à 1,2 % |
| Glycérine | b2 |  |  |  | 18 |  | 51/92 = 55 % |
| ELTEX P KL177 | c1 | 2 | 230 | 2,16 | 142 | 800[(1)] |  |
| ENGAGE 8100 | d2 | 1 | 190 | 2,16 | 58 | 16* |  |
| ESCORENE UL00119 | d3 | 0,65 | 190 | 2,16 | 86 | 36[(2)] |  |

£ : selon ISO R527

# : module en traction

∗ : module sécant en flexion à 2% d'allongement selon ASTM D-790.

(1) : module en flexion selon ISO 178 (SOLVAY data sheet)

(2) : module selon ASTM D638 (EXXON data sheet).

Dans le tableau 1, MI représente l'indice de fluidité en fondu (mesuré selon la norme ISO 1133 dans les conditions précisées dans le tableau), Tm désigne la température de fusion, E est le module d'élasticité, et $f_x$ représente la teneur pondérale en groupements fonctionnels (anhydride ou alcool).

**Procédures d'évaluation**

Mise en oeuvre

Les ingrédients, en poudre et en granules, sont introduits dans un micromalaxeur à cylindres SCHWABENTHAN® prechauffé à 180°C. Ils fondent et forment en s'homogénéisant une feuille épaisse (un "crêpe").

L'écart entre les cylindres est réglé de sorte à ce que le crêpe ait une épaisseur de 1 à 2 mm sur le cylindre.

Le produit est malaxé pendant une durée prédéterminée, mesurée à partir du moment de formation du crêpe. On évalue l'échauffement de la matière, l'adhérence aux cylindres, la consistance de la masse fondue, ainsi que l'aspect du crêpe.

A l'issue du malaxage, le crêpe est retiré des cylindres. On juge que la matière se prête bien au calandrage si l'adhérence est assez faible et la tenue en fondu est suffisante pour pouvoir enlever le crêpe en une seule pièce en fin de malaxage (typiquement après 20 minutes).

Pour l'exemple 8, la procédure a été légèrement adaptée, en ce sens que les ingrédients ont d'abord été fondus et homogénéisés dans un malaxeur interne de type BRABENDER® W350, dont l'enceinte était préchauffée à 155°C. Le mélange a été effectué pendant 6 minutes, sous une pression de 1 kg/cm$^2$ et à une vitesse des cames de 50 tours/minute (came lente).

La masse fondue est ensuite déposée sur le micromalaxeur à cylindres, et l'aptitude au calandrage est évaluée comme ci-dessus.

Dans tous les exemples (1-8), la mise en oeuvre se déroule sans difficultés.

Les crêpes ont une bonne tenue en phase fondue et ne présentent pas de rugosité excessive. Aucune adhérence anormale ne se déclare pendant le malaxage, et le crêpe peut être séparé des cylindres sans problèmes, en une pièce, en fin d'essai.

Durcissement en écoulement élongationnel

Pour déterminer le durcissement en écoulement élongationnel, des éprouvettes rectangulaires de 8,8 mm de largeur et 52,8 mm de longueur sont découpées dans le crêpe obtenu selon la procédure décrite ci-dessus, après relaxation des contraintes internes dans un bain d'huile à la température de mesure. Elles sont étirées après équilibrage à 170°C à une vitesse de déformation constante (1/s) au moyen d'un rhéomètre RME (RHEOMETRICS MECHANICAL EXTENSOMETER).

On constate dans toutes les réalisations de l'invention que la force d'étirage augmente de façon monotone jusqu'à un allongement nominal $\Delta L/L_0$ important (> 2,5, soit un Hencky strain = 1,25). Ici, $\Delta L$ représente l'extension ($\Delta L = L - L_0$), L est la longueur au maximum de force, et $L_0$ est la longueur initiale de l'échantillon. Au-delà de cet allongement critique, l'éprouvette casse ou la force décroît. Compte tenu du fait que la section de l'éprouvette diminue de façon inversement proportionnelle à l'allongement, ce comportement indique un durcissement considérable en écoulement élongationnel.

Pour des polymères linéaires ne présentant pas ou peu de durcissement en écoulement élongationnel, la force d'étirage diminue avec l'allongement, ou passe par un maximum à des valeurs de $\Delta L/L_0$ plus basses ($\approx$ 1).

Tenue en phase fondue

La tenue en phase fondue est estimée durant la mise en oeuvre sur micromalaxeur. Elle est bonne pour tous les exemples (cote ++).

Dans quelques cas (exemples 1 à 3), on a exploité la rhéométrie en cisaillement oscillatoire à 170°C (géométrie plan-plan) pour démontrer la bonne tenue en phase fondue. On a observé pour les 3 échantillons testés que le module élastique G' adopte une courbure positive à faible gradients de vitesse, de l'ordre de 0,1/s. Ceci reflète une excellente tenue en phase fondue (cote +++), confirmant ainsi l'évaluation sur micromalaxeur.

Fluage (résistance en température)

Des éprouvettes rectangulaires (éprouvettes ASTM de 15 mm de largeur) sont soumises à un test de fluage à 125°C pendant 20 minutes sous une contrainte de 50 kPa. Les résultats sont classés selon l'allongement final (+++ : < 5 % ; ++ : < 10 % ; + : < 15 % ; - : > 15 %).

Module élastique

Le module est mesuré sur un film pressé à 0,6 mm d'épaisseur après la mise en oeuvre telle que décrite ci-dessus. Des éprouvettes ASTM de 15 mm de largeur sont utilisées, avec une distance entre mors de 100 mm.

La traction est effectuée à 23°C et 1 mm/min. Le module est évalué entre 0,05 % et 0,25 % d'allongement (module segment). Sauf mention contraire, tous les modules d'élasticité mentionnés dans la présente demande sont mesurés selon la norme ISO 527-3/1993.

Brève description des exemples (Tableau 2)

- Exemple 1 : variante de réalisation avantageuse de l'invention : la composition présente un durcissement en écoulement élongationnel jusqu'à des allongements importants, une bonne tenue en phase fondue, un niveau de souplesse adéquat pour les applications en habillage intérieur d'automobiles, et un comportement sur micromalaxeur présageant une bonne aptitude au calandrage.
- Exemple 2 : comme 1, avec EVA au lieu de l'élastomère polyoléfinique. La rigidité et la résistance thermique du produit augmentent, tandis que les propriétés rhéologiques sont peu affectées.
- Exemple 3 : comme 2, avec un LLDPE greffé d'anhydride maléique (MAH) au lieu du terpolymère porteur de MAH LOTADER.

- Exemple comparatif 4R : composition contenant 55 % du mélange (A). Le crêpe est nettement plus rugueux à l'issue du malaxage que dans les exemples précédents. L'allongement maximal en écoulement élongationnel devient limite.
- Exemple 5 : composition contenant 15 % des composants (a)+(b). La force d'étirage, lors du test sur RME, plafonne à un allongement nominal de 1, avant d'augmenter à nouveau. Ce comportement, quoique encore acceptable, est jugé limite.
- Exemple 6 : comme 1, en diminuant la part de PP au profit de l'élastomère polyoléfinique. La rigidité et la résistance au fluage à 120°C diminuent tandis que les propriétés rhéologiques en fondu sont peu affectées.
- Exemple 7 : comme 1, avec un rapport de fonctionnalité MAH/OH plus faible (plus défavorable). Le comportement en écoulement élongationnel ressemble à celui de l'exemple 5, et est jugé limite
- Exemple 8 : illustre l'utilisation d'un polyalcool monomérique.
- Exemple 9 : composition comprenant 40 pcr (% en poids par rapport à (A) + (B)) de carbonate de calcium. L'échantillon est préparé comme dans l'exemple 8 (la température de malaxage étant toutefois de 145°C).
- Exemple 10R : cette composition ne comprend ni polyalcool ni polyamine (b). La mise a oeuvre, impossible sur le malaxeur SCHWABENTHAN® en raison d'une adhérence excessive, a été effectuée sur un malaxeur interne BRABENDER® W50, pendant 6 minutes. La composition fondue a été extrudée à 170°C en une lanière d'une épaisseur de 1 à 2 mm. L'allongement critique ($\Delta L/L_0$) est très faible, ce qui confirme que les compositions ne comprenant pas de constituant (b) ne conviennent pas en vue du thermoformage.

Tableau 2

| Exemple : | 1 | 2 | 3 | 4R | 5 | 6 | 7 | 8 |
|---|---|---|---|---|---|---|---|---|
| Constituant (A) | 10 % a1, 20 % b1 | 10 % a1, 20 % b1 | 21,5 % a2, 8,5 % b1 | 18 % a1, 25 % a3, 12 % b1 | 12 % a4, 3 % b1 | 10 % a1, 20 % b1 | 6 % a1, 24 % b1 | 30 % a1, 0,15 % b2 |
| Constituant (B) | 30 % c1, 40 % d2 | 30 % c1, 40 % d3 | 30 % c1, 40 % d3 | 30 % c1, 15 % d2 | 30 % c1, 32,5 % d2, 22,5 % d3 | 20 % c1, 50 % d2 | 30 % c1, 40 % d2 | 29,85 % c1, 40 % d2 |
| Stéarate de Zn | 0,5 pcr | 0,5 pcr | 0,5 pcr | 0,5 pcr | 0,5 pcr | 0,5 pcr | 0,5 pcr | 0,5 pcr |
| Stéarate de Ca | 0,5 pcr | 2,0 pcr | 0,5 pcr | 2,0 pcr | 0,5 pcr | 2,0 pcr | 2.0 pcr | 1.5 pcr |
| IRGANOX 1010 | 0,3 pcr | 0,7 pcr | 0,7 pcr | 0,7 pcr | 0,7 pcr | 0,7 pcr | 0,7 pcr | 0,7 pcr |
| TGF | 0,6 à 1,8 | 0,6 à 1,8 | 0,2 à 1,4 | 2,4 à 6,3 | | 0,6 à 1,8 | 0,3 à 0,9 | 5,5 à 9,4 |
| Durée de malaxage (min.) | 30 | 20 | 20 | 20 | 20 | 20 | 20 | 20 |
| $\Delta L/L_0$ | > 5 | > 4 | > 10 | > 3 | > 10 | > 5 | > 8 | > 5 |
| Tenue en fondu | +++ | +++ | +++ | ++ | ++ | ++ | ++ | ++ |
| Fluage | ++ | +++ | ++ | | +++ | -- | + | |
| Module E (MPa) | 70 | 120 | | | | | | |

TGF = $(f_{MAH}.c_{MAH}) / (f_{OH}.c_{OH})$ ; la gamme de valeurs citée reflète l'incertitude sur la teneur en groupements fonctionnels dans les polymères commerciaux.

(pcr = pourcentage par rapport au poids total des constituants (A) + (B))

Tableau 2 (suite)

| Exemple : | 9 | | 10R | |
|---|---|---|---|---|
| Constituant (A) | 10 % | a5 | 30 % | a5 |
| | 20 % | b1 | | |
| Constituant (B) | 30 % | c1 | 30 % | c1 |
| | 40 % | d2 | 40 % | d2 |
| Stéarate de Zn | 0,5 pcr | | | |
| Stéarate de Ca | 0,5 pcr | | 3 pcr | |
| IRGANOX 1010 | 0,3 pcr | | 0,3 pcr | |
| Charges (CaCO$_3$) | 40 pcr | | | |
| TGF | 1,3 à 2,2 | | $\infty$ | |
| Durée de malaxage (min.) | 10 | | 6 | |
| $\Delta L/L_0$ | 3,5 | | 0,8 | |
| Tenue en fondu | ++ | | +++ | |
| Fluage | +++ | | | |
| Module E (MPa) | 85 | | | |

**Revendications**

1. Composition comprenant (en poids) :

   (A) de 10 à 45 % d'un mélange essentiellement constitué de :

      (a) au moins un polymère porteur de groupements anhydride d'acide, et
      (b) au moins un composé choisi parmi les polyalcools et les polyamines, ainsi que

   (B) de 90 à 55 % d'une ou plusieurs polyoléfines non-fonctionnelles, comprenant (par rapport au poids total de (a), (b) et (B))
   plus de 15 % d'au moins une polyoléfine non-fonctionnelle présentant un module d'élasticité (E) inférieur à 200 MPa, et
   moins de 50 % de polypropylène isotactique.

2. Composition selon la revendication 1, dans laquelle le polymère (a) est porteur de groupements anhydride maléique

3. Composition selon l'une des revendications précédentes, dans laquelle le polymère (a) est une polyoléfine porteuse de groupements anhydride d'acide.

4. Composition selon l'une des revendications précédentes, dans laquelle le composé (b) comprend au moins un copolymère constitué de :

(i) au moins une $\alpha$-oléfine,
(ii) au moins un monomère porteur de fonctions alcool et/ou amine, et
(iii) éventuellement, un ou plusieurs autres comonomères.

5. Composition selon l'une des revendications précédentes, dans laquelle la teneur pondérale du composé (b) en fonctions alcool ou amine est d'au moins 200 ppm.

6. Composition selon l'une des revendications précédentes, dans laquelle

$$0,2 \leq \frac{\sum_{a_1} f_X^{a_i} \cdot c_{a_1}}{\sum_{b_1} f_Y^{b_i} \cdot c_{b_1}} \leq 50 \text{ où :}$$

- la sommation au numérateur concerne tous les polymères $a_i$ du type (a) et celle du dénominateur tous les composés (polyalcools et/ou polyamines) $b_i$ du type (b) ;
- le facteur

$$f_X^{a_i}$$

représente la concentration pondérale des groupements anhydride X dans le polymère $a_i$ ;
- le facteur

$$c_{a_i}$$

représente la concentration pondérale du polymère $a_i$ dans la composition ;
- les facteurs

$$f_Y^{b_i} \text{ et } c_{b_i}$$

ont des significations analogues en ce qui concerne les fonctions alcool et/ou amine Y contenus dans le composé $b_i$.

7. Composition selon l'une des revendications précédentes, dans laquelle le constituant (B) comprend :

soit (c) au moins une polyoléfine dont la température de fusion est d'au moins 130°C et
(d) plus de 15 % (par rapport au poids total de (a), (b) et (B)) d'au moins un copolymère comprenant au moins 50 % en moles d'éthylène, présentant un module d'élasticité (E) inférieur à 200 MPa et une température de tusion inférieure à 95°C,
soit (e) plus de 30 % (par rapport au poids total de (a), (b) et (B)) d'au moins une polyoléfine présentant un module d'élasticité (E) inférieur à 200 MPa et une température de fusion supérieure à 95 °C.

8. Composition selon la revendication 7, dans laquelle le constituant (B) comprend, en poids, de 25 à 65 % de polyoléfine (c) et 35 à 75 % de copolymère (d).

9. Composition selon l'une des revendications précédentes, comprenant en outre un ou plusieurs sels d'acide gras.

10. Feuille dont au moins une couche est constituée d'une composition selon l'une des revendications précédentes.

11. Article dont au moins une partie se présente sous la forme d'une mousse constituée d'une composition selon l'une des revendications 1 à 9.

**Office européen des brevets**

**RAPPORT DE RECHERCHE EUROPEENNE**

Numéro de la demande

EP 98 20 1756

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO 95 24444 A (DU PONT ;SPELTHANN HEINZ H (DE); HAUSMANN KARLHEINZ (CH)) 14 septembre 1995 * page 6, ligne 35 - ligne 36; revendications 1-3,7-11 * * page 10, ligne 4 - ligne 12 * | 1-10 | C08L23/02 |
| X | EP 0 565 734 A (SHOWA DENKO KK) 20 octobre 1993 * page 9, ligne 14 - ligne 48 * * page 7, ligne 26 - ligne 42; revendications 1,8,10 * | 1-10 | |
| X | BE 780 966 A (ETHYLENE PLASTIQUE SA) 17 juillet 1972 * revendications 1-3; exemples 42-50 * | 1-11 | |
| X | US 3 299 184 A (C.J. WHITWORTH ET AL) 17 janvier 1967 * colonne 2, ligne 60 - colonne 3, ligne 6 * | 6 | |
| X | FR 2 519 013 A (MITSUBISHI RAYON CO) 1 juillet 1983 * page 2, ligne 36 - page 3, ligne 5; revendications 1,2 * * page 4, ligne 19 - page 5, ligne 11 * * page 6, ligne 22 - ligne 26 * | 1-10 | **DOMAINES TECHNIQUES RECHERCHES** (Int.Cl.6) C08L |
| X | WO 97 19133 A (ATOCHEM ELF SA ;BREANT PATRICE (FR)) 29 mai 1997 * page 7, ligne 6 - ligne 10; revendications 1-4 * | 1-10 | |

Le présent rapport a été établi pour toutes les revendications

| Lieu de la recherche | Date d'achèvement de la recherche | Examinateur |
|---|---|---|
| LA HAYE | 22 septembre 1998 | Clemente Garcia, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)